# EUROPÄISCHE PATENTSCHRIFT

(11) **EP 2 236 369 B1**
(45) Veröffentlichungstag und Bekanntmachung des Hinweises auf die Patenterteilung: **16.11.2011**
(21) Anmeldenummer: 10157682.5
(22) Anmeldetag: 25.03.2010
(51) Int. Cl.: B60T 1/06, F16D 65/02, F16D 65/12

(54) **Verbindung einer Bremse mit einer Radachse eines Kraftfahrzeugs**
Connection of a vehicle brake with a wheel axle
Raccordement d'un frein de véhicules avec un essieu de roue

(30) Priorität: 02.04.2009 DE 102009015940
(43) Veröffentlichungstag der Anmeldung: 06.10.2010
(73) Patentinhaber: Knorr-Bremse Systeme für Nutzfahrzeuge GmbH, 80809 München (DE)
(72) Erfinder: Eichler, Thomas, 80809 München (DE)
(74) Vertreter: Mattusch, Gundula

(56) Entgegenhaltungen:
- DE-A1- 10 112 229
- DE-A1-102004 034 676
- FR-A1- 2 771 150
- JP-A- 2006 064 026

## Beschreibung

Die vorliegende Erfindung betrifft eine Verbindung einer Bremse, insbesondere einer Scheibenbremse, mit einer Radachse eines Kraftfahrzeuges, vorzugsweise eines Nutzfahrzeuges, nach dem Oberbegriff des Anspruchs 1.

Für die Funktion insbesondere einer Scheibenbremse ist die verdrehgesicherte Anbindung eines Bremsteiles an einem gegenüber einem sich drehenden Rad starren Fahrzeugteil erforderlich, während eine Bremsscheibe der Scheibenbremse fest mit dem Rad verbunden ist.

Durch die beim Bremsen auftretenden Bremskräfte, die auf die Radachse übertragen werden, bestehen besondere Anforderungen an den Anschluss zwischen dem Bremsteil und dem Fahrzeugteil, üblicherweise einem Achsflansch. Für eine Übertragung der Bremskräfte sind unterschiedliche Lösungen bekannt.

So ist in der EP 0 849 486 A2 eine Verbindung gezeigt und beschrieben, bei der das Bremsteil über achsparallel zur Radachse sich erstreckende Schrauben mit dem Achsflansch verbunden ist, wobei das Bremsteil flächig am Achsflansch anliegt.

Dabei wirken die Bremskräfte parallel zu einer Trennfuge zwischen dem Bremsteil und dem Achsflansch und werden durch die Schraubverbindungen aufgenommen, die jeweils aus einer Durchgangsbohrung, einer Gewindebohrung sowie einer Schraube bestehen, wobei die Durchgangsbohrung im Achsflansch oder im Bremsteil vorgesehen sein kann und die Gewindebohrung in dem anderen zugeordneten Bauteil.

Zur Durchführung der Schraube muss der Durchmesser der Durchgangsbohrung größer sein als der Schaftdurchmesser der Schraube. Dies führt insbesondere bei hohen Bremsmomenten, die durch den Reibschluss zwischen dem Bremsteil und dem Achsflansch nicht übertragen werden, zu einer Relativbewegung des die Durchgangsbohrung aufweisenden Bauteils gegenüber dem anderen, bis die Laibung der Durchgangsbohrung am Schraubenschaft zur Anlage kommt.

Hierdurch werden die Schrauben in erheblichem Maße auf Abscheren beansprucht, was eine entsprechende Querschnittsdimensionierung erforderlich macht, die einer kostengünstigen Montage sowie einer gewichtsoptimierten Bauweise entgegensteht. Diese auch als Mikrobewegungen zu bezeichnenden Verschiebungen der Anlageflächen zueinander führen vielfach zu mechanischen Spannungen im Bremsteil, vornehmlich in einem Bremsträger, der einen Bremssattel hält, mit der Gefahr von Brüchen an Streben des Bremsträgers und letztendlich einem Versagen der Bremse insgesamt. Durch die mögliche Relativbewegung der Schrauben zu den Durchgangsbohrungen besteht überdies die Gefahr, dass sich die Schrauben selbsttätig lösen.

Aufgrund des häufig nur geringen Bauraumes im Anschlussbereich mit der Achse können entsprechend große Schrauben nicht eingesetzt werden, so dass der erforderliche Reibschluss nicht ausreicht, um das Bremsmoment zu übertragen.

In diesem Fall werden die Schraubverbindungen durch Einsatz von Passschrauben ergänzt, was nur mit erheblichen Fertigungskosten zu realisieren ist. Überdies ist aufgrund von Fertigungstoleranzen der Einsatz von lediglich einer Passschraube möglich, so dass diese Maßnahme lediglich eine begrenzte Lösung darstellt.

Der Erfindung liegt die Aufgabe zugrunde, eine Verbindung zu schaffen, durch die mit geringem konstruktivem und fertigungstechnischem Aufwand eine höhere Betriebssicherheit der Bremse erreicht wird.

Diese Aufgabe wird durch eine Verbindung mit den Merkmalen des Anspruchs 1 gelöst.

Durch den Einsatz von Keilhülsen wird praktisch eine Quetschverschraubung gebildet, durch die ein Formschluss zwischen dem Bremsteil und dem Achsflansch hergestellt ist, so dass eine wie auch immer geartete Relativverschiebung dieser beiden Bauteile zueinander ausgeschlossen ist, wobei dies die erwähnten Mikroverschiebungen einschließt.

Dabei greifen die randseitig vorgesehenen Keilflächen, die sich zur jeweiligen Stirnseite der Keilhülse hin verjüngen, in die einander zugewandten, miteinander fluchtenden Schraubenbohrungen, wobei durch das Anziehen der Schrauben bei der Montage eine derartige Verformung der Keilhülse erfolgt, dass diese sich an die Schraubenkontur anpasst. Damit wird quasi die Funktion einer Passschraube erreicht.

Im Gegensatz zum Stand der Technik, bei dem, wie erwähnt, aus Toleranzgründen bislang lediglich eine Passschraube einsetzbar war, können nun sämtliche Schraubenverbindungen mit Keilhülsen bestückt werden, so dass sich ein sehr intensiver Formschluss ergibt.

In Addition mit dem vorhandenen Reibschluss ist so eine Verbindung geschaffen, durch die auch höchste auftretende Bremsmomente übertragen werden.

Neben diesen rein funktionalen Vorteilen zeichnet sich die Erfindung noch dadurch aus, dass sie sehr einfach und damit kostengünstig zu realisieren ist. Die Keilhülse kann als einfaches Formteil hergestellt sein, wobei die Schraubenbohrungen keinerlei besonderer Bearbeitung bedürfen, einschließlich der Einhaltung kleinster Toleranzen.

Nach einer vorteilhaften Weiterbildung der Erfindung ist vorgesehen, dass entweder der Achsflansch oder das Bremsteil im Einfügebereich der Keilhülse im Sinne einer Stufenbohrung ausgebildet ist, wobei eine umfängliche Mantelfläche der Keilhülse, an die sich die beiden Keilflächen anschließen, zylinderartig ausgebildet ist und an der Wandung der Stufenbohrung anliegt.

Bei einer Verschraubung kommt es dadurch zu einer Stauchung der Keilhülse, durch die sich die Innenwandung an den Schraubenschaft und der Außenflächenbereich an die zugeordneten Anlageflächen des Bremsteiles und des Achsflansches andrückt, wobei die Verformungskräfte durch die Keilwinkel so hoch sind, dass die Keilhülse insgesamt plastisch verformt wird.

Nach einem weiteren Gedanken der Erfindung ist vorgesehen, zumindest jeweils die einer Hälfte des Achsflansches bzw. des Bremsteiles zugeordneten Keilhülsen vor der Montage an einer Montagehilfe zu positionieren und zwar derart, dass sie entsprechend dem Lochmuster der Schraubenbohrungen angeordnet sind.

Damit können die einer Verbindungsseite zugeordneten Keilhülsen bequem und mit geringem Zeitaufwand so platziert werden, dass eine unmittelbare Verschraubung der miteinander zu verbindenden Bauteile erfolgen kann.

Bevorzugt wird als Montagehilfe ein dünnes Blatt eingesetzt, das aus Papier, Pappe, Folie oder einem anderen geeigneten Material bestehen kann.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teil einer Bremse in einer Seitenansicht
- Figur 2: eine Einzelheit der Bremse in einer perspektivischen Ansicht
- Figur 3: die Einzelheit nach Figur 2 in einem Längsschnitt
- Figur 4: einen Teilausschnitt der erfindungsgemäßen Verbindung in einer Schnittdarstellung
- Figur 5: eine weitere Einzelheit der Bremse in einer perspektivischen Ansicht.

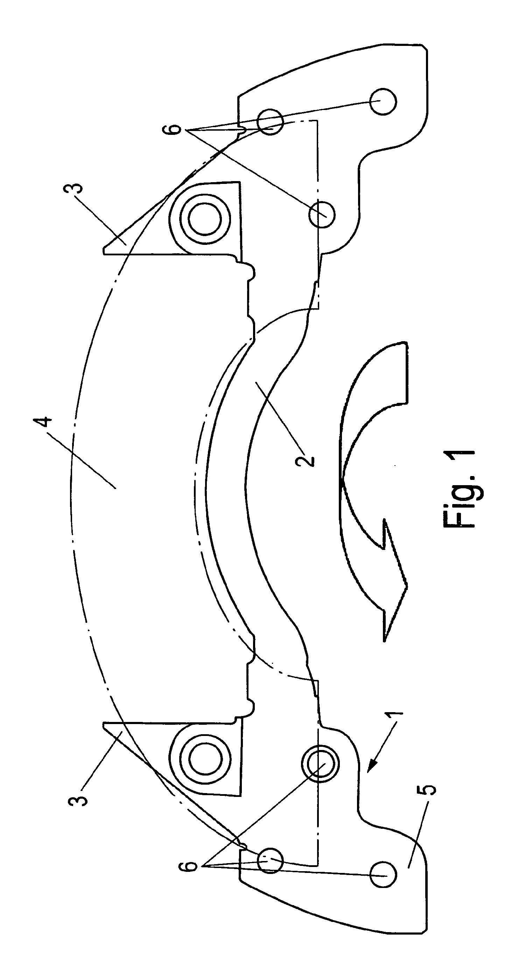

In der Figur 1 ist als Teil einer Scheibenbremse ein Bremsträger 1 dargestellt, der zwei sich gegenüberliegende Bremshömer 3 aufweist, die einen Belagschacht begrenzen, in den ein nicht dargestellter Bremsbelag einsetzbar ist.

Die vorzugsweise als pneumatisch betätigbar ausgebildete Scheibenbremse ist mit zwei Bremsbelägen ausgestattet, die bei einer Bremsung beidseitig gegen eine im Teilausschnitt strichpunktiert dargestellte Bremsscheibe 4 pressbar sind, die mit einem Fahrzeugrad fest verbunden ist. Die Drehrichtung der Bremsscheibe 4 ist in der Figur 1 mit einem Drehpfeil gekennzeichnet.

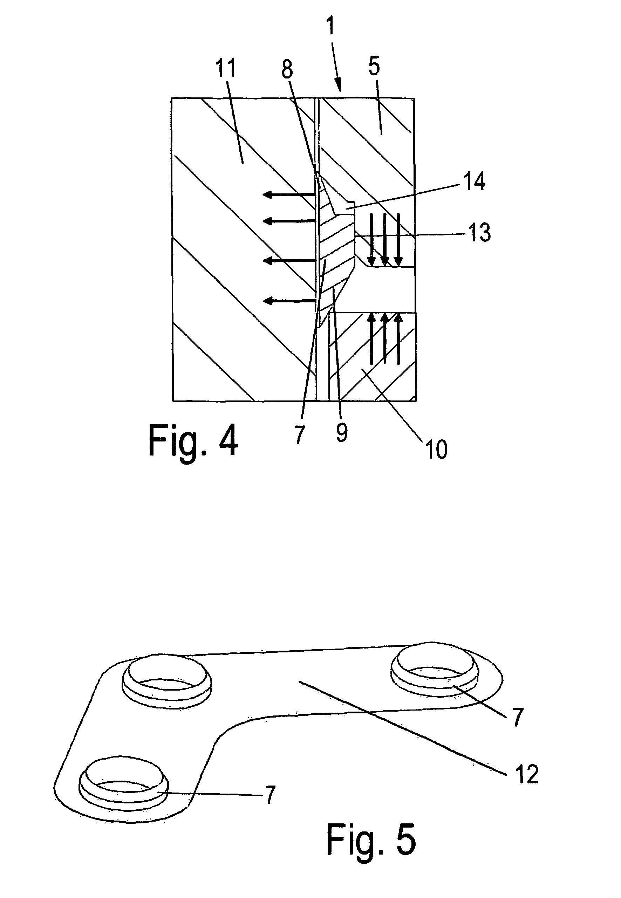

Der Bremsträger 1 ist an einem fahrzeugseitig ortsfest angebrachten Achsflansch 10 (Figur 4) befestigt, wozu in Anschlussflächen 5 des Bremsträgers 1, die durch Zugstreben 2 miteinander verbunden sind, Durchgangsbohrungen 6 vorgesehen sind, durch die in den Achsflansch 10 eingedrehte Schrauben 11 gesteckt sind. Erfindungsgemäß ist im Übergangsbereich von miteinander fluchtenden Schraubenbohrungen, d.h. einer Durchgangsbohrung 6 des Bremsträgers 1 und einer Gewindebohrung des Achsflansches 10, eine auf der zugeordneten Schraube 11 geführte Keilhülse 7 vorgesehen.

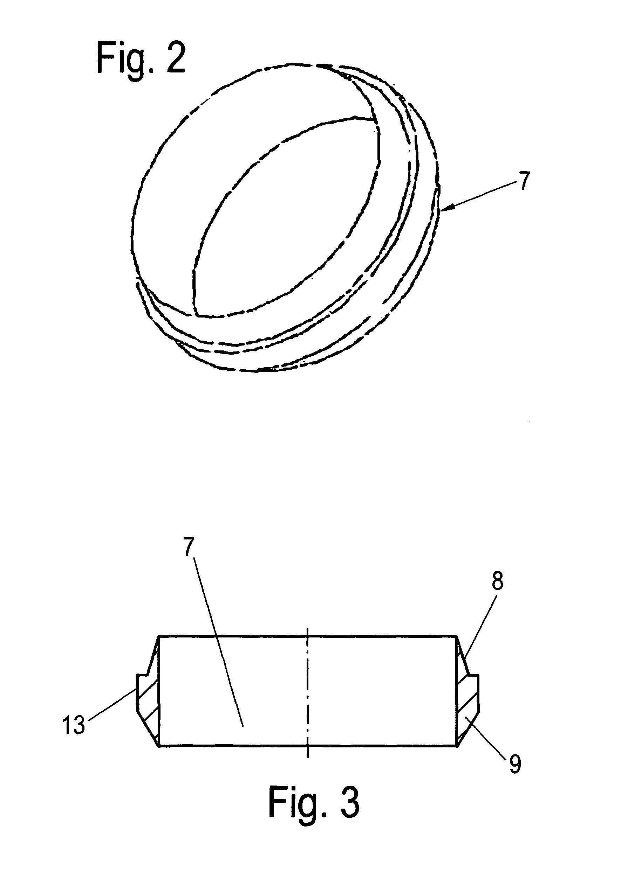

Wie besonders deutlich in den Figuren 2 und 3 erkennbar ist, weist die Keilhülse 7 in beiden außenseitigen Randbereichen sich zur jeweiligen Stirnseite hin verjüngende Keilflächen 8, 9 auf, die bereichsweise in die jeweils benachbarte Schraubbohrung ragen.

In der Figur 4 ist eine Montageposition dargestellt, in der der Bremsträger 1 noch nicht mit dem Achsflansch 10 verschraubt ist. Es ist zu erkennen, dass sich die dem Achsflansch 10 zugeordnete Keilfläche 9 der Keilhülse 7 bis zu einer zylinderförmigen Mantelfläche 13 erstreckt, die in einer Stufenbohrung 14 des Bremsträgers 1 einliegt und sich an der Wandung dieser Stufenbohrung 14 abstützt.

Dabei ist die dem Bremsträger 1 zugeordnete Keilfläche 8 radial nach innen gegenüber der Keilfläche 9 zurückgesetzt, so dass bei einer durch eine folgende Verschraubung sich einstellenden Verformung eine Auflage des durch die Keilfläche 8 definierten Bereiches erfolgt, durch die ein definierter Sitz der Keilhülse 7 gewährleistet ist.

Bei der Verschraubung wird die Keilhülse derart gestaucht, dass sie sich an die Kontur der Schraube 11 anpasst und somit eine passschraubenälnliche Funktion, d.h., einen Formschluss bildet.

In der Figur 5 ist eine mit mehreren Keilhülsen 7 bestückte Montagehilfe 12 dargestellt, wobei die Anordnung der Keilhülsen 7 dem Lochmuster der Durchgangsbohrungen 6 einer der beiden Anschlussflächen 5 entspricht.

Wie erwähnt, besteht die Montagehilfe 12 aus einem dünnen, blattförmigen Gebilde, dessen Oberflächen überdies gegenüber den anliegenden Flächen des Bremsträgers 1 und des Achsflansches 10 einen hohen Reibungskoeffizienten aufweist, was den gewünschten Reibschluss begünstigt, für den Fall, dass die Montagehilfe 12 als verlorenes Teil in der Verbindung zwischen Bremsträger und Achsflansch 10 verbleibt.

### Bezugszeichenliste

- 1: Bremsträger
- 2: Zugstrebe
- 3: Bremsträgerhorn
- 4: Bremsscheibe
- 5: Anschlussfläche
- 6: Durchgangsbohrung
- 7: Keilhülse
- 8: Randbereich
- 9: Randbereich
- 10: Achsflansch
- 11: Schraube
- 12: Montagehilfe

## Patentansprüche

1. Verbindung einer Bremse, insbesondere einer Scheibenbremse, mit einer Radachse eines Kraftfahrzeuges, vorzugsweise eines Nutzfahrzeuges, wobei an einem an der Radachse starr befestigten Achsflansch (10) ein Bremsteil der Bremse in Form eines Bremsträgers (1) oder eines Brenissattels mittels parallel zur Radachse geführter Schrauben (11) angeschlossen ist, **dadurch gekennzeichnet, dass** im Übergangsbereich von miteinander fluchtenden Schraubenbohrungen des Achsflansches (10) und des Bremsteiles eine auf der zugeordneten Schraube (11) geführte Keilhülse (7) vorgesehen ist, die in beiden außenseitigen Randbereichen (8, 9) sich zur jeweiligen Stirnseite hin verjüngende Keilflächen aufweist, die bereichsweise in die jeweils benachbarte Schraubbohrung ragen.

2. Verbindung nach Anspruch 1, **dadurch gekennzeichnet, dass** die Keilhülse (7) zwischen den mit Keilflächen versehenen Randbereichen (8, 9) eine zylinderförmige Mantelfläche (13) aufweist.

3. Verbindung nach Anspruch 1 oder 2, **dadurch gekennzeichnet, dass** eine der Keilflächen sich bis zu der Mantelfläche (13) erstreckt, während die andere Keilfläche nach innen radial abgesetzt verläuft.

4. Verbindung nach einem der vorhergehenden Ansprüche, **dadurch gekennzeichnet, dass** die Keilhülse (7) in einer Stufenbohrung (14) positioniert ist und mit ihrer Mantelfläche (13) an der Wandung der Stufenbohrung (14) anliegt.

5. Verbindung nach einem der vorhergehenden Ansprüche, **dadurch gekennzeichnet, dass** der Keilwinkel des sich zur Mantelfläche (13) erstreckenden Randbereiches (9) größer ist als der des gegenüberliegenden Randbereiches (8).

6. Verbindung nach einem der vorhergehenden Ansprüche, **dadurch gekennzeichnet, dass** die zumindest einer Hälfte des Bremsteiles zugeordneten Keilhülsen (7) von einer Montagehilfe (12) gehalten sind.

7. Verbindung nach einem der vorhergehenden Ansprüche, **dadurch gekennzeichnet, dass** die Montagehilfe (12) aus einem dünnen, blattförmigen Gebilde besteht.

8. Verbindung nach einem der vorhergehenden Ansprüche, **dadurch gekennzeichnet, dass** die Montagehilfe (12) aus Papier, Pappe, Folie oder dergleichen besteht.

## Claims

1. Connection of a brake, in particular a disc brake, to a wheel axle of a motor vehicle, preferably a commercial vehicle, wherein a brake element of the brake in the form of a brake support plate (1) or a brake calliper is connected by means of screws (11) guided in parallel with the wheel axle is connected to an axle flange (10) rigidly fastened on said wheel axle, **characterised in that** in the region of transition of mutually aligned screw bores of said axle flange (10) and said brake element a wedge sleeve (7) is provided that is guided on the associated screw (11) and that is provided with wedge surfaces tapering towards the respective face side in both edge regions (8, 9) on the outside, which wedge surfaces project in certain areas into the respective adjacent screw bore.

2. Connection according to Claim 1, **characterised in that** said wedge sleeve (7) is provided with a cylindrical lateral area (13) between the edge areas (8, 9) provided with wedge surfaces.

3. Connection according to Claim 1 or 2, **characterised in that** one of said wedge surfaces extends up to said lateral area (13) whereas the other wedge surface extends with a radial offset towards the inside.

4. Connection according to any of the preceding Claims, **characterised in that** said wedge sleeve (7) is positioned in a stepped bore (14) and bears against the wall of said stepped bore (14) by its lateral area.

5. Connection according to any of the preceding Claims, **characterised in that** the wedge angle of said edge region (9) extending towards said lateral area is wider than the angle of the opposite edge region (8).

6. Connection according to any of the preceding Claims, **characterised in that** said wedge sleeves (7) associated to at least one half of said brake element are held by a mounting aid.

7. Connection according to any of the preceding Claims, **characterised in that** said mounting aid (12) is made of a thin blade-shaped structure.

8. Connection according to any of the preceding Claims, **characterised in that** said mounting aid (12) consists of paper, cardboard, film material or the like.

## Revendications

1. Raccord d'un frein, en particulier d'un frein à disque, à un essieu de roue d'un véhicule automobile, de préférence d'un véhicule utilitaire, dans lequel un élément de frein dudit frein sous forme d'une plaque d'appui de frein (1) ou d'un étrier de frein est relié, moyennant des vis (11) guidés en parallèle audit essieu de roue, à une flasque d'essieu (10) fixée, de façon rigide, audit essieu de roue, **caractérisé en ce qu'**en la région de transition des forures de vis alignées l'une sur l'autre de ladite flasque d'essieu (10), et dudit élément de frein, une douille à coin (7) est disposée, qui est guidée sur la vis y affectée (11), et qui est munie des aires à coin, qui se réduisent en cône vers le côté de face respectif dans les deux régions de bord (8, 9) du côté extérieur, ces aires à coin se trouvant en saillie, dans certains régions, dans la forure de vis adjacente respective.

2. Raccord selon la revendication 1, **caractérisé en ce que** ladite douille à coin (7) est munie d'une surface latérale cylindrique (13) entre les régions de bord (8, 9) munies des aires à coin.

3. Raccord selon la revendication 1 ou 2, **caractérisé en ce qu'**une desdites aires à coin s'étend jusqu'à ladite région latérale (13), pendant que l'autre surface à coin s'étend à un déport radial vers l'intérieur.

4. Raccord selon une quelconque des revendications précédentes, **caractérisé en ce que** ladite douille à coin (7) est positionnée dans une forure à gradins (14) et porte contre la paroi de ladite forure à gradins (14) par sa région latérale.

5. Raccord selon une quelconque des revendications précédentes, **caractérisé en ce que** l'angle de coin de ladite région de bord (9), qui s'étend vers ladite surface latérale, est plus grand que l'angle de la région de bord opposée (8).

6. Raccord selon une quelconque des revendications précédentes, **caractérisé en ce que** lesdites douilles à coins (7) affectées à au moins une moitié dudit élément de frein sont retenues moyennant un dispositif d'assistance de montage.

7. Raccord selon une quelconque des revendications précédentes, **caractérisé en ce que** ledit dispositif d'assistance de montage (12) est fait à une structure mince sous forme d'une lame.

8. Raccord selon une quelconque des revendications précédentes, **caractérisé en ce que** ledit dispositif d'assistance de montage (12) consiste en papier, en carton, en une feuille ou un matériau similaire.
